# EUROPÄISCHE PATENTSCHRIFT

(11) **EP 3 593 448 B1**
(45) Veröffentlichungstag und Bekanntmachung des Hinweises auf die Patenterteilung: **07.04.2021**
(21) Anmeldenummer: 18705144.6
(22) Anmeldetag: 14.02.2018
(51) Int. Cl.: H02P 6/10, H02P 29/50, H02P 23/00

(54) **REGELVORRICHTUNG FÜR EINE ELEKTRISCHE MASCHINE, ELEKTRISCHES ANTRIEBSSYSTEM UND VERFAHREN ZUR REGELUNG EINER ELEKTRISCHEN MASCHINE**
REGULATING DEVICE FOR AN ELECTRIC MACHINE, ELECTRIC DRIVE SYSTEM, AND METHOD FOR REGULATING AN ELECTRIC MACHINE
DISPOSITIF DE RÉGULATION POUR UNE MACHINE ÉLECTRIQUE, SYSTÈME D'ENTRAÎNEMENT ÉLECTRIQUE ET PROCÉDÉ POUR RÉGULER UNE MACHINE ÉLECTRIQUE

(30) Priorität: 07.03.2017 DE 102017203691
(43) Veröffentlichungstag der Anmeldung: 15.01.2020
(73) Patentinhaber: Robert Bosch GmbH, 70442 Stuttgart (DE)
(72) Erfinder: MALCHOW, Florian, 70176 Stuttgart (DE); MANDERLA, Maximilian, 71638 Ludwigsburg (DE)
(86) Internationale Anmeldenummer: PCT/EP2018/053683
(87) Internationale Veröffentlichungsnummer: WO 2018/162195

(56) Entgegenhaltungen:
- EP-A1- 2 164 165
- EP-A1- 2 840 707
- US-A- 4 679 136
- US-B1- 9 160 260
- TSANG K M ET AL: "Transient disturbance rejection improvement by a combined variable structure-model following control approach", POWER ELECTRONICS AND DRIVE SYSTEMS, 1999. PEDS '99. PROCEEDINGS OF TH E IEEE 1999 INTERNATIONAL CONFERENCE ON HONG KONG 27-29 JULY 1999, PISCATAWAY, NJ, USA,IEEE, US, Bd. 2, 27. Juli 1999 (1999-07-27), Seiten 1128-1133, XP010351971, ISBN: 978-0-7803-5769-3

## Beschreibung

Die vorliegende Erfindung betrifft eine Regelvorrichtung für eine elektrische Maschine, ein elektrisches Antriebssystem mit einer solchen Regelvorrichtung sowie ein Verfahren zur Regelung einer elektrischen Maschine. Insbesondere betrifft die vorliegende Erfindung das Regeln einer elektrischen Maschine zur Minimierung einer Störgröße.

### Stand der Technik

Die Druckschrift DE 10 2009 000 930 A1 offenbart ein Verfahren und eine Anordnung zur Reduktion der Drehmomentwelligkeit in einem Permanentmagnet-Motorsystem. Das Motorsystem umfasst einen Permanentmagnetmotor, der an einen Wechselrichter gekoppelt ist. Das in dieser Druckschrift beschriebene Verfahren umfasst einen Schritt zum Modifizieren von Betriebssteuersignalen, um welligkeitsreduzierende Betriebssteuersignale zu generieren. Diese modifizierten Betriebssteuersignale werden an einen Inverter zur Steuerung des Permanentmagnetmotors geliefert

Das Dokument TSANG K M ET AL: "Transient disturbance rejection improvement by a combined variable structure-model following control approach", POWER ELECTRONICS AND DRIVE SYSTEMS, 1999. PEDS '99. PROCEEDINGS OF TH E IEEE 1999 INTERNATIONAL CONFERENCE ON HONG KONG 27-29 JULY 1999, PISCATAWAY, NJ, USA,IEEE, US, Bd. 2, 27. Juli 1999 (1999-07-27), Seiten 1128-1133, ISBN: 978-0-7803-5769-3 offenbart eine elektrische Maschine mit einer ersten Regeleinrichtung ("PID correction"), die dazu ausgelegt ist, eine erste Stellgröße zur Minimierung einer Störgröße in einem Betriebspunkt der elektrischen Maschine bereitzustellen; einer zweiten Regeleinrichtung ("VSC"), die dazu ausgelegt ist, eine zweite Stellgröße (i_{gm}) zum Einstellen eines vorgegebenen ersten Sollwerts (ω_{ref}) in der elektrischen Maschine bereitzustellen; einer Recheneinrichtung ("Model"), die eine Veränderung (ω̅ₘ) des Betriebspunkts (ω̅) der elektrischen Maschine aufgrund einer Ansteuerung der elektrischen Maschine mit der zweiten Stellgröße (i_{gm}) berechnet; und einer Steuereinrichtung, die die elektrische Maschine unter Verwendung einer Kombination der ersten Stellgröße und der zweiten Stellgröße steuert.

Druckschriften US 4 679 136 A, EP 2 840 707 A1, US 9 160 260 B1 und EP 2 164 165 A1 offenbaren verschiedene Regelvorrichtungen zur minimieren von Störgrößen. Drehfeldmaschinen, wie zum Beispiel Käfigläufer-Asynchronmaschinen oder Permanentmagnet-Synchronmaschinen besitzen aufgrund ihrer Bauweise keine idealen sinusförmigen Flussverteilungen im Luftspalt. Im Betrieb führt dies bei einer Regelung mit sinusförmigen Strömen zu oberwellenbehafteten ungleichmäßigen Drehmomenten. Für die Minimierung von harmonischen Oberwellen sind zwei grundsätzliche Ansätze möglich. Ein Ansatz besteht in einer gezielten gesteuerten Aufschaltung einer überlagerten exogenen Kompensationsspannung auf die Motorspannung. Alternative Ansätze basieren auf einem zusätzlichen Regelkreis. Hierbei kann beispielsweise in einem inneren Regelkreis zunächst ein Soll-Drehmoment vorgegeben werden, welches anschließend von außen durch ein Kompensationsverfahren für höhere harmonische Schwingungen überlagert wird.

### Offenbarung der Erfindung

Die vorliegende Erfindung offenbart eine Regelvorrichtung für eine elektrische Maschine gemäß Patentanspruch 1, ein elektrisches Antriebssystem gemäß Patentanspruch 8 und ein Verfahren zur Regelung einer elektrischen Maschine gemäß Patentanspruch 10.

### Demgemäß ist vorgesehen:

Eine Regelvorrichtung für eine elektrische Maschine mit einer ersten Regeleinrichtung, einer zweiten Regeleinrichtung, einer Recheneinrichtung und einer Steuereinrichtung. Die erste Regeleinrichtung ist dazu ausgelegt, eine erste Stellgröße zur Minimierung einer Störgröße in einem Betriebspunkt der elektrischen Maschine bereitzustellen. Die Recheneinrichtung ist dazu ausgelegt, eine Veränderung des Betriebspunktes der elektrischen Maschine aufgrund einer Ansteuerung der elektrischen Maschine mit der ersten Stellgröße zu berechnen. Die zweite Regeleinrichtung ist dazu ausgelegt, eine zweite Stellgröße zum Einstellen eines vorgegebenen Sollwerts für die elektrische Maschine bereitzustellen. Insbesondere kann hierbei ein Sollwert für den Betriebspunkt vorgegeben werden. Die zweite Stellgröße für die zweite Regeleinrichtung wird unter Verwendung einer Differenz von einem erfassten Wert des Betriebspunktes und der in der Recheneinrichtung berechneten Veränderung des Betriebspunktes bei einer Ansteuerung mit der durch die erste Regeleinrichtung bereitgestellten ersten Stellgröße ermittelt. Mit anderen Worten, die zweite Regeleinrichtung ermittelt die zweite Stellgröße auf Grundlage eines berechneten Betriebspunktes, der sich ohne die Beeinflussung durch die erste Stellgröße ergeben würde. Die Steuereinrichtung ist dazu ausgelegt, die elektrische Maschine unter Verwendung einer Kombination der ersten Stellgröße und der zweiten Stellgröße anzusteuern.

### Weiterhin ist vorgesehen:

Ein elektrisches Antriebssystem mit einer elektrischen Maschine und einer erfindungsgemäßen Regelvorrichtung.

### Ferner ist vorgesehen:

Ein Verfahren zur Regelung einer elektrischen Maschine mit den Schritten des Ermittelns einer ersten Stellgröße zur Minimierung einer Störgröße in einem Betriebspunkt der elektrischen Maschine und des Berechnens einer Veränderung des Betriebspunktes der elektrischen Maschine aufgrund einer Ansteuerung der elektrischen Maschine mit der ermittelten ersten Stellgröße. Das Verfahren umfasst ferner einen Schritt zum Berechnen einer Differenz zwischen einem messtechnisch erfassten Wert des Betriebspunktes und der berechneten Veränderung des Betriebspunkts aufgrund einer Ansteuerung mit der ersten Stellgröße. Weiterhin umfasst das Verfahren einen Schritt zum Ermitteln einer zweiten Stellgröße zum Einstellen eines vorgegebenen ersten Sollwerts in der elektrischen Maschine unter Verwendung der Differenz zwischen dem erfassten Wert des Betriebspunkts und der berechneten Veränderung des Betriebspunkts aufgrund einer Ansteuerung mittels der ersten Stellgröße. Schließlich umfasst das Verfahren einen Schritt zum Ansteuern der elektrischen Maschine unter Verwendung einer Kombination der ermittelten ersten Stellgröße und der ermittelten zweiten Stellgröße.

### Vorteile der Erfindung

Der vorliegenden Erfindung liegt die Erkenntnis zugrunde, dass bei einer Regelung, wie sie beispielsweise zur Ansteuerung einer elektrischen Maschine verwendet wird, und bei der einerseits eine vorgegebene Sollgröße eingeregelt werden soll und andererseits zusätzlich eine Störgröße ausgeregelt werden soll, sich diese beiden Vorgaben gegenseitig beeinflussen.

Der vorliegenden Erfindung liegt daher die Idee zugrunde, dieser Erkenntnis Rechnung zu tragen und eine Regelung für eine elektrische Maschine vorzusehen, bei der das Einregeln eines vorgegebenen Sollwerts und das Kompensieren einer Störgröße voneinander entkoppelt und somit modular und unabhängig voneinander ausgeführt werden können. Hierzu ist es vorgesehen, für das Kompensieren der Störgröße und des Einstellens eines Sollwerts für eine Betriebsgröße jeweils zwei voneinander entkoppelte Regelschleifen zu verwenden. Eine erste Regelschleife ist hierbei für das Kompensieren der Störgröße vorgesehen. Eine zweite Regelschleife ist ausschließlich für das Einregeln eines vorgegebenen Sollwerts vorgesehen. In dieser Regelschleife wird nicht der ermittelte reale Wert der Betriebsgröße als Eingangsgröße verwendet, sondern ein Wert der Betriebsgröße, bei dem der Einfluss der Störgrößenkompensation herausgerechnet wurde. Hierzu ist es erforderlich, den Einfluss einer Stellgröße für die Störgrößenkompensation zu bestimmen, und diesen Einfluss im Regelkreis für das Einstellen des Sollwerts von der tatsächlichen Betriebsgröße abzuziehen.

Durch ein derartiges Entkoppeln von Störgrößenkompensation und Regelung des Sollwerts kann eine besonders präzise und effiziente Regelung für eine elektrische Maschine erzielt werden. Bestehende Regelung ohne Störkompensation können unverändert übernommen werden.

Eine derartige verbesserte Regelung der elektrischen Maschine mit Störgrößenkompensation ermöglicht somit auch den Einsatz moderner, kostengünstiger optimierter elektrischer Maschinen, die ohne Störgrößenkompensation nur verminderte Laufeigenschaften bereitstellen können. Auf diese Weise können mit der erfindungsgemäßen Regelvorrichtung die Laufeigenschaften von elektrischen Maschinen verbessert werden. Insbesondere kann durch den Einsatz von modernen kostengünstigen elektrischen Maschinen auch der Preis für ein elektrisches Antriebssystem gesenkt werden.

Gemäß einer Ausführungsform umfasst der Betriebspunkt der elektrischen Maschine ein Drehmoment, einen magnetische Fluss der elektrischen Maschine und/oder einen elektrischen Strom der elektrischen Maschine. Insbesondere kann der Betriebspunkt beispielsweise den Phasenstrom bzw. die Phasenströme in den elektrischen Phasen der Maschine umfassen. Bei dem Betriebspunkt der elektrischen Maschine kann es sich hierbei sowohl um einen direkt erfassbaren bzw. erfassten Betriebspunkt handeln, oder alternativ auch um einen Betriebspunkt, der gegebenenfalls indirekt aus weiteren Größen der elektrischen Maschine zuvor berechnet wird. So kann beispielsweise auch aus bekannten elektrischen Strömen in der Maschine auf das Drehmoment in der elektrischen Maschine geschlossen werden, ohne dass das Drehmoment direkt mittels Sensorik erfasst werden muss. Bei einer Regelvorrichtung, welche als Betriebspunkt beispielsweise das Drehmoment einer elektrischen Maschine verwendet, kann somit die Drehmomentwelligkeit herabgesetzt werden. Dies ermöglicht einen besonders ruhigen Lauf der Maschine.

Gemäß einer Ausführungsform umfasst die Störgröße in dem Betriebspunkt einen Rippel oder eine harmonische Oberschwingung, beispielsweise in einem Drehmoment. Rippel bzw. harmonische Oberschwingungen sind in elektrischen Antriebssystemen ein weit verbreitetes Phänomen. Durch Minimierung derartiger Störgrößen kann die Laufruhe der elektrischen Maschine gesteigert werden.

Gemäß einer Ausführungsform umfassen die erste Stellgröße und/oder die zweite Stellgröße, welche von der ersten Regeleinrichtung bzw. der zweiten Regeleinrichtung bereitgestellt werden, eine elektrische Spannung, die an der elektrischen Maschine eingestellt werden soll. Insbesondere können die erste Stellgröße und/oder die zweite Stellgröße auch elektrische Spannungen für eine feldorientierte Regelung einer elektrischen Maschine umfassen.

Gemäß einer Ausführungsform ist die Steuereinrichtung dazu ausgelegt, an der elektrischen Maschine eine elektrische Spannung bereitzustellen. Beispielsweise kann die Steuereinrichtung einen Stromrichter umfassen, welcher basierend auf der Kombination der ersten und zweiten Stellgröße einer elektrischen Maschine die entsprechenden Phasenspannungen einstellt.

Gemäß einer Ausführungsform ist die Recheneinrichtung dazu ausgelegt, die erste Stellgröße unter Verwendung eines vorgegebenen zweiten Sollwerts einzustellen. Durch das Vorgeben eines zweiten Sollwerts für die Störgrößenkompensation in der ersten Regeleinrichtung kann die Störgrößenkompensation entsprechend von verschiedenen Betriebsmodi oder gegebenenfalls weiteren Betriebspunkten oder Betriebszuständen eingestellt werden.

Gemäß einer Ausführungsform umfasst die Regelvorrichtung einen Sensor, der dazu ausgelegt ist, den Betriebspunkt der elektrischen Maschine zu erfassen und eine zu dem Betriebspunkt der elektrischen Maschine korrespondierende Größe bereitzustellen. Hierbei kann der zu erfassende Betriebspunkt entweder direkt erfasst werden oder gegebenenfalls können auch weitere Parameter der elektrischen Maschine erfasst werden und aus denen anschließend der Betriebspunkt der elektrischen Maschine berechnet werden.

Gemäß einer Ausführungsform des elektrischen Antriebssystems umfasst die elektrische Maschine eine Asynchronmaschine oder eine permanenterregte Synchronmaschine.

Die obigen Ausgestaltungen und Weiterbildungen lassen sich, soweit sinnvoll, beliebig miteinander kombinieren.

### Kurze Beschreibung der Zeichnungen

Die vorliegende Erfindung wird nachfolgend anhand der in den schematischen Figuren der Zeichnung angegebenen Ausführungsbeispiele näher erläutert. Dabei zeigen:
- Figur 1:: eine schematische Darstellung eines elektrischen Antriebssystems mit einer Regelvorrichtung für eine elektrische Maschine gemäß einer Ausführungsform; und
- Figur 2:: eine schematische Darstellung eines Ablaufdiagramms, wie es einem Verfahren zur Regelung einer elektrischen Maschine gemäß einer Ausführungsform zugrunde liegt.

### Ausführungsformen der Erfindung

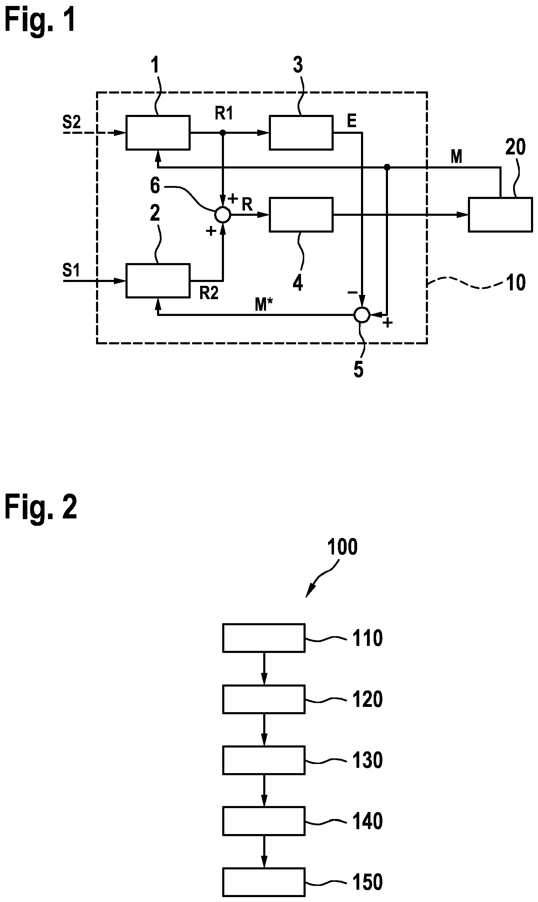

Figur 1 zeigt eine schematische Darstellung eines elektrischen Antriebssystems mit einer Regelvorrichtung für eine elektrische Maschine 20. Das elektrische Antriebssystem umfasst in der elektrischen Maschine 20 eine Regelvorrichtung 10. Die Regelvorrichtung 10 umfasst eine erste Regeleinrichtung 1, eine zweite Regeleinrichtung 2, eine Recheneinrichtung 3 und eine Steuereinrichtung 4. An der zweiten Regeleinrichtung 2 ist ein erster Sollwert S1 vorgegeben, auf den ein Betriebspunkt der elektrischen Maschine 20 eingestellt werden soll. Beispielsweise kann es sich bei diesem ersten Sollwert S1 um ein Drehmoment handeln, welches in der elektrischen Maschine 20 eingestellt werden soll. Darüber hinaus sind jedoch auch beliebige andere Betriebspunkte, wie zum Beispiel ein elektrischer Strom in die elektrische Maschine 20 und auch beliebige weitere Betriebspunkte möglich. Die zweite Regeleinrichtung 2 bestimmt daraufhin aus dem vorgegebenen Sollwert S1 und einem aktuellen Wert des Betriebspunktes eine Stellgröße R2 zum Ansteuern der elektrischen Maschine 20. Dabei wird im Gegensatz zu einer konventionellen Regelung hierbei nicht der tatsächliche aktuelle Wert des Betriebspunktes der elektrischen Maschine 20 in der zweiten Regeleinrichtung 2 verwendet, sondern ein im Nachfolgenden noch näher beschriebener modifizierter Wert des Betriebspunktes.

Die erste Regeleinrichtung 1 wertet den aktuellen Wert des Betriebspunktes M, beispielsweise des Drehmoments oder des elektrischen Stroms in die elektrische Maschine 20 aus. Dabei kann die erste Regeleinrichtung 1 insbesondere eine Störgröße in dem erfassten Betriebspunkt M erfassen. Bei dieser Störgröße kann es sich beispielsweise um einen Rippel in dem Betriebspunkt M, insbesondere um eine Welligkeit mit einer harmonischen Oberschwingung entsprechend der Drehfrequenz der elektrischen Maschine 20 handeln. Darüber hinaus sind grundsätzlich jedoch auch beliebige weitere Störanteile in der Betriebsgröße M möglich. Die erste Regeleinrichtung 1 generiert daraufhin eine erste Stellgröße R1. Diese erste Stellgröße R1 entspricht einer Stellgröße zur Kompensation des detektierten Störanteils in dem Betriebspunkt M. Die erste Stellgröße R1 dient somit einer Minimierung oder gegebenenfalls einer vollständigen Kompensation des Anteils der Störgröße in dem Betriebspunkt M. Die erste Stellgröße R1 zur Kompensation der Störgröße wird mit der zweiten Stellgröße R2 zum Einstellen eines vorgegebenen Sollwerts S1 kombiniert und diese Kombination der beiden Stellgrößen R1 und R2 wird der Steuereinrichtung 4 zugeführt. Beispielsweise kann die Kombination der ersten Stellgröße R1 und der zweiten Stellgröße R2 in dem Summierglied 6 erfolgen. Das Summierglied 6 gibt daraufhin die Stellgröße R aus der Kombination der ersten Stellgröße R1 und der zweiten Stellgröße R2 aus. Die Kombination der ersten Stellgröße R1 und der zweiten Stellgröße R2 wird daraufhin der Steuereinrichtung 4 zugeführt. Diese Steuereinrichtung 4 steuert daraufhin entsprechend der Kombination der beiden Stellgrößen R1 und R2 die elektrische Maschine 20 an. Beispielsweise kann es sich bei der Steuereinrichtung 4 um einen elektrischen Stromrichter handeln, der entsprechend der Stellgröße R an den Phasenanschlüssen der elektrischen Maschine 20 entsprechende elektrische Spannungen einstellt. Darüber hinaus ist jedoch auch eine beliebige andere Ansteuerung der elektrischen Maschine 20 auf Grundlage der Kombination der ersten Stellgröße R1 und der zweiten Stellgröße R2 möglich. Während die erste Regeleinrichtung 1 zur Kompensation der Störgröße in dem Betriebspunkt M den Betriebspunkt M direkt auswertet, führt die zweite Regeleinrichtung 2 eine Regelung durch, welche von der Störgrößenkompensation durch die erste Regeleinrichtung 1 entkoppelt ist. Hierzu wird der zweiten Regeleinrichtung 2 eine modifizierte Betriebsgröße M* bereitgestellt, welche der Betriebsgröße der elektrischen Maschine 20 ohne Störgrößenkompensation entspricht. Hierzu muss der Anteil der Störgrößenkompensation in der Betriebsgröße M aus der Betriebsgröße M entfernt werden, bevor die so modifizierte Betriebsgröße M* der zweiten Regeleinrichtung 2 bereitgestellt werden kann.

Zur Ermittlung des Anteils der Störgrößenkompensation in der Betriebsgröße M wird die erste Stellgröße R1 der ersten Regeleinrichtung 1 einer Recheneinrichtung 3 zugeführt. Die Recheneinrichtung 3 berechnet einen Anteil der Betriebsgröße M, welcher der ersten Stellgröße R1 entspricht. Die Berechnung kann beispielsweise auf einer Modellierung des elektrischen Antriebssystems erfolgen. Für die Berechnung sind beliebige Modelle, insbesondere beliebige Simulationsmodelle, möglich, welche es ermöglichen, aus der ersten Stellgröße R1 den Anteil der Störgrößenkompensation in der Betriebsgröße M zu berechnen. Die Recheneinrichtung 3 liefert als Ausgangswert somit eine theoretische Betriebsgröße E, welche bei alleiniger Ansteuerung mit der ersten Stellgröße R1 resultieren würde. Dieser theoretische Anteil E gemäß der ersten Stellgröße R1 wird von der tatsächlichen Betriebsgröße M subtrahiert. Somit ergibt sich die Eingangsgröße M* der zweiten Regeleinrichtung 2 aus der Differenz der tatsächlichen Betriebsgröße M und dem Anteil E der Betriebsgröße gemäß der ersten Stellgröße R1. Diese Differenz kann beispielsweise in einem Subtrahierglied 5 gebildet werden.

Durch das Entfernen des Anteils E entsprechend der ersten Stellgröße R1 in der Betriebsgröße M erfolgt die Regelung in der zweiten Regeleinrichtung 2 somit entkoppelt von der Störgrößenkompensation in der ersten Regeleinrichtung 1. Die erste Regeleinrichtung 1 und die zweite Regeleinrichtung 2 bilden somit zwei voneinander entkoppelte Regeleinrichtungen, welche sich gegenseitig nicht oder nur minimal beeinflussen. Hierdurch kann ein modularer Aufbau der Regelung für eine Störgrößenkompensation und das Einstellen eines Sollwerts, beispielsweise für ein Drehmoment oder ähnliches erfolgen. Dies ermöglicht eine besonders einfache, effiziente und präzise Konzeption für eine Regelung eines elektrischen Antriebssystems. Insbesondere können die Störgrößenkompensation und der Regelkreis für das Einstellen der Betriebsgröße, beispielsweise des Drehmoments oder ähnlichem, unabhängig voneinander erfolgen. Die Entkopplung und Modularisierung der beiden Stellgrößen ermöglicht darüber hinaus auch das Wiederverwenden von bestehenden Blöcken oder Modulen in weiteren Antriebssystemen, ohne dass diese hierfür erneut vollständig entwickelt werden müssten.

Die erste Regeleinrichtung 1 kann eine Störgrößenkompensation basierend auf fest vorgegebenen Parametern ausführen. Insbesondere kann beispielsweise eine maximale Kompensation des Störgrößenanteils in der Betriebsgröße M vorgegeben werden. Darüber hinaus sind auch beliebige weitere Rahmenbedingungen möglich, die fest in der ersten Regeleinrichtung 1 vorgegeben werden können. Darüber hinaus ist es jedoch auch möglich, die Störgrößenkompensation in der ersten Regeleinrichtung 1 dynamisch anzupassen. Beispielsweise können abhängig von einem Betriebsmodus des elektrischen Antriebssystems unterschiedliche Kompensationsstufen für die Störgrößenkompensation vorgegeben werden. So kann beispielsweise in einem ersten Betriebsmodus eine maximale Störgrößenkompensation vorgegeben werden und in einem weiteren Betriebsmodus nur eine eingeschränkte oder gegebenenfalls gar keine Störgrößenkompensation vorgegeben werden. Durch das Einschränken bzw. vollständige Eliminieren der Störgrößenkompensation verändern sich die Laufeigenschaften des elektrischen Antriebssystems. Dies kann beispielsweise dazu genutzt werden, um einem Benutzer eine mögliche Gefahrensituation aufzuzeigen.

Darüber hinaus ist es auch möglich, einen weiteren Sollwert S2 vorzugeben, auf den die Regelung der ersten Regeleinrichtung eingestellt werden soll. Auf diese Weise können gegebenenfalls auch ein oder mehrere weitere Parameter, Rahmenbedingungen oder Umwelteigenschaften mit in die Regelung der ersten Regeleinrichtung 1 einbezogen werden.

Bei der elektrischen Maschine 20 kann es sich dabei um eine beliebige elektrische Maschine, wie zum Beispiel eine Asynchronmaschine oder eine permanenterregte Synchronmaschine handeln. Entsprechend der eingesetzten elektrischen Maschine 20 kann dabei die Ansteuerung durch die Steuereinrichtung 4 angepasst werden. Auch können entsprechend der jeweiligen Maschine unterschiedliche Betriebspunkte M durch die Regelvorrichtung 10 geregelt werden.

Figur 2 zeigt eine schematische Darstellung eines Ablaufdiagramms, wie es einem Verfahren 100 zur Regelung einer elektrischen Maschine 20 gemäß einer Ausführungsform zugrunde liegt. In Schritt 110 wird eine erste Stellgröße R1 ermittelt. Diese erste Stellgröße R1 wird, wie zuvor beschrieben, zur Minimierung einer Störgröße in einem Betriebspunkt M der elektrischen Maschine 20 ermittelt. In Schritt 120 wird daraufhin ein Wert berechnet, der eine Veränderung des ersten Betriebspunkts M der elektrischen Maschine 20 aufgrund einer Ansteuerung der elektrischen Maschine 20 mit der ermittelten ersten Stellgröße R1 entspricht. In Schritt 130 wird eine Differenz zwischen einem erfassten Wert des Betriebspunkts M und der berechneten Veränderung E des Betriebspunkts M aufgrund der Ansteuerung mit der ersten Stellgröße R1 berechnet. In Schritt 140 wird eine zweite Stellgröße R2 berechnet, die zum Einstellen eines vorgegebenen Sollwerts S1 in der elektrischen Maschine 20 dient. Schließlich wird in Schritt 150 die elektrische Maschine 20 unter Verwendung einer Kombination der ermittelten ersten Stellgröße R1 und der ermittelten zweiten Stellgröße R2 berechnet.

Zusammenfassend betrifft die vorliegende Erfindung eine Regelung für eine elektrische Maschine, bei der gleichzeitig eine Störgröße kompensiert und ein Sollwert eingestellt wird. Hierbei sind zwei voneinander unabhängige Regelkreise vorgesehen. Ein erster Regelkreis dient zur Kompensation der Störgröße. Ein zweiter Regelkreis dient zum Einstellen eines vorgegebenen Sollwerts. Bei der Regelung des vorgegebenen Sollwerts wird die Regelschleife von der Störgrößenkompensation entkoppelt. Auf diese Weise kann eine modulare, unabhängige Regelung für den Sollwert und die Störgrößenkompensation erzielt werden.

## Patentansprüche

1. Regelvorrichtung (10) für eine elektrische Maschine (20), mit:
einer ersten Regeleinrichtung (1), die dazu ausgelegt ist, eine erste Stellgröße (R1) zur Minimierung einer Störgröße in einem Betriebspunkt (M) der elektrischen Maschine (20) bereitzustellen;
einer Recheneinrichtung (3), die dazu ausgelegt ist, eine Veränderung (E) des Betriebspunkts (M) der elektrischen Maschine (20) aufgrund einer Ansteuerung der elektrischen Maschine (20) mit der ersten Stellgröße (R1) zu berechnen;
einer zweiten Regeleinrichtung (2), die dazu ausgelegt ist, eine zweite Stellgröße (R2) zum Einstellen eines vorgegebenen ersten Sollwerts (S1) in der elektrischen Maschine (20) bereitzustellen, wobei die zweite Stellgröße (R2) unter Verwendung einer Differenz zwischen einem erfassten Wert des Betriebspunktes (M) und der berechneten Veränderung (E) des Betriebspunktes (M) aufgrund der Ansteuerung mit der ersten Stellgröße (R1) ermittelt wird; und
einer Steuereinrichtung (4), die dazu ausgelegt ist, die elektrische Maschine (20) unter Verwendung einer Kombination der ersten Stellgröße (R1) und der zweiten Stellgröße (R2) anzusteuern.

2. Regelvorrichtung (10) nach Anspruch 1, wobei der Betriebspunkt (M) der elektrischen Maschine (20) ein Drehmoment der elektrischen Maschine (20) und/oder einen elektrischen Strom der elektrischen Maschine (20) umfasst.

3. Regelvorrichtung (10) nach Anspruch 1 oder 2, wobei die Störgröße in dem Betriebspunkt (M) einen Rippel oder eine harmonische Oberschwingung in dem Betriebspunkt (M) umfasst.

4. Regelvorrichtung (10) nach einem der Ansprüche 1 bis 3, wobei die erste Stellgröße (R1) und/oder die zweite Stellgröße (R2) eine an der elektrischen Maschine (20) einzustellende elektrische Spannung umfasst.

5. Regelvorrichtung (10) nach einem der Ansprüche 1 bis 4, wobei die Steuereinrichtung (4) dazu ausgelegt ist, an der elektrischen Maschine (20) eine elektrische Spannung für Phasenanschlüsse der elektrischen Maschine (20) bereitzustellen.

6. Regelvorrichtung (10) nach einem der Ansprüche 1 bis 5, wobei die Recheneinrichtung (3) dazu ausgelegt ist, die erste Stellgröße (R1) unter Verwendung eines vorgegebenen zweiten Sollwerts (S2) einzustellen.

7. Regelvorrichtung (10) nach einem der Ansprüche 1 bis 6, mit einem Sensor, der dazu ausgelegt ist, den Betriebspunkt (M) der elektrischen Maschine (20) zu erfassen und eine zu dem Betriebspunkt (M) der elektrischen Maschine (20) korrespondierende Größe bereitzustellen.

8. Elektrisches Antriebssystem, mit:
einer elektrischen Maschine (20); und
einer Regelvorrichtung (10) nach einem der Ansprüche 1 bis 7.

9. Elektrisches Antriebssystem nach Anspruch 8, wobei die elektrische Maschine (20) eine Asynchronmaschine oder eine permanent erregte Synchronmaschine umfasst.

10. Verfahren (100) zur Regelung einer elektrischen Maschine (20), mit den Schritten:
Ermitteln (110) einer ersten Stellgröße (R1) zur Minimierung einer Störgröße in einem Betriebspunkt (M) der elektrischen Maschine (20);
Berechnen (120) einer Veränderung (E) des Betriebspunktes (M) einer elektrischen Maschine (20) aufgrund einer Ansteuerung der elektrischen Maschine (20) mit der ermittelten ersten Stellgröße (R1);
Berechnen (130) einer Differenz zwischen einem erfassten Wert des Betriebspunktes (M) und der berechneten Veränderung (E) des Betriebspunktes (M) aufgrund der Ansteuerung mit der ersten Stellgröße (R1);
Ermitteln (140) einer zweiten Stellgröße (R2) zum Einstellen eines vorgegebenen ersten Sollwert (S1) in der elektrischen Maschine (20); und
Ansteuern (150) der elektrischen Maschine (20) unter Verwendung einer Kombination der ermittelten ersten Stellgröße (R1) und der ermittelten zweiten Stellgröße (R2).

## Claims

1. Regulating device (10) for an electric machine (20), comprising:
a first regulating unit (1), which is designed to provide a first target variable (R1) to minimize an interference variable at an operating point (M) of the electric machine (20);
a computing device (3), which is designed to calculate a change (E) in the operating point (M) of the electric machine (20) based on driving the electric machine (20) with the first target variable (R1);
a second regulating unit (2), which is designed to provide a second target variable (R2) for setting a specified first target value (S1) in the electric machine (20), wherein the second target variable (R2) is determined using a difference between a detected value of the operating point (M) and the calculated change (E) in the operating point (M) based on driving with the first target variable (R1); and
a control device (4), which is designed to drive the electric machine (20) using a combination of the first target variable (R1) and the second target variable (R2).

2. Regulating device (10) according to Claim 1, wherein the operating point (M) of the electric machine (20) comprises a torque of the electric machine (20) and/or an electric current of the electric machine (20) .

3. Regulating device (10) according to Claim 1 or 2, wherein the interference variable at the operating point (M) comprises a ripple or a harmonic oscillation at the operating point (M).

4. Regulating device (10) according to any one of Claims 1 to 3, wherein the first target variable (R1) and/or the second target variable (R2) comprises an electric voltage which is to be set on the electric machine (20).

5. Regulating device (10) according to any one of Claims 1 to 4, wherein the control device (4) is designed to provide an electric voltage on the electric machine (20) for phase connections of the electric machine (20).

6. Regulating device (10) according to any one of Claims 1 to 5, wherein the computing device (3) is designed to set the first target variable (R1) using a specified second target value (S2).

7. Regulating device (10) according to any one of Claims 1 to 6, comprising a sensor which is designed to detect the operating point (M) of the electric machine (20) and to provide a variable corresponding to the operating point (M) of the electric machine (20) .

8. Electric drive system, with:
an electric machine (20); and
a regulating device (10) according to any one of Claims 1 to 7.

9. Electric drive system according to Claim 8, wherein the electric machine (20) comprises an asynchronous machine or a permanently excited synchronous machine.

10. Method (100) for regulating an electric machine (20), comprising the steps:
Determination (110) of a first target variable (R1) to minimize an interference variable at an operating point (M) of the electric machine (20);
Calculation (120) of a change (E) in the operating point (M) of an electric machine (20) based on driving the electric machine (20) with the determined first target variable (R1);
Calculation (130) of a difference between a detected value of the operating point (M) and the calculated change (E) in the operating point (M) based on driving with the first target variable (R1);
Determination (140) of a second target variable (R2) for setting a specified first target value (S1) in the electric machine (20); and
Driving (150) the electric machine (20) using a combination of the determined first target variable (R1) and the determined second target variable (R2).

## Revendications

1. Arrangement de régulation (10) pour une machine électrique (20), comprenant :
un premier dispositif de régulation (1), qui est conçu pour fournir une première grandeur de réglage (R1) en vue de réduire au minimum une grandeur perturbatrice dans un point de fonctionnement (M) de la machine électrique (20) ;
un dispositif de calcul (3), qui est conçu pour calculer une modification (E) du point de fonctionnement (M) de la machine électrique (20) en raison d'une commande de la machine électrique (20) avec la première grandeur de réglage (R1) ;
un deuxième dispositif de régulation (2), qui est conçu pour fournir une deuxième grandeur de réglage (R2) en vue de régler une première valeur de consigne (S1) prédéfinie dans la machine électrique (20), la deuxième grandeur de réglage (R2) étant déterminée en utilisant une différence entre une valeur acquise du point de fonctionnement (M) et la modification (E) calculée du point de fonctionnement (M) en raison de la commande avec la première grandeur de réglage (R1) ; et
un dispositif de commande (4), qui est conçu pour commander la machine électrique (20) en utilisant une combinaison de la première grandeur de réglage (R1) et de la deuxième grandeur de réglage (R2).

2. Arrangement de régulation (10) selon la revendication 1, le point de fonctionnement (M) de la machine électrique (20) comprenant un couple de la machine électrique (20) et/ou un courant électrique de la machine électrique (20).

3. Arrangement de régulation (10) selon la revendication 1 ou 2, la grandeur perturbatrice dans le point de fonctionnement (M) comprenant une ondulation ou une oscillation harmonique dans le point de fonctionnement (M).

4. Arrangement de régulation (10) selon l'une des revendications 1 à 3, la première grandeur de réglage (R1) et/ou la deuxième grandeur de réglage (R2) comprenant une tension électrique à régler au niveau de la machine électrique (20).

5. Arrangement de régulation (10) selon l'une des revendications 1 à 4, le dispositif de commande (4) étant conçu pour fournir à la machine électrique (20) une tension électrique pour les bornes de phase de la machine électrique (20).

6. Arrangement de régulation (10) selon l'une des revendications 1 à 5, le dispositif de calcul (3) étant conçu pour régler la première grandeur de réglage (R1) en utilisant une deuxième valeur de consigne (S2) prédéfinie.

7. Arrangement de régulation (10) selon l'une des revendications 1 à 6, comprenant un capteur qui est conçu pour détecter le point de fonctionnement (M) de la machine électrique (20) et fournir une grandeur correspondant au point de fonctionnement (M) de la machine électrique (20).

8. Système d'entraînement électrique, comprenant :
une machine électrique (20) ; et
un arrangement de régulation (10) selon l'une des revendications 1 à 7.

9. Système d'entraînement électrique selon la revendication 8, la machine (20) étant une machine asynchrone ou une machine synchrone à excitation permanente.

10. Procédé (100) de régulation d'une machine électrique (20), comprenant les étapes suivantes :
détermination (110) d'une première grandeur de réglage (R1) en vue de réduire au minimum une grandeur perturbatrice dans un point de fonctionnement (M) de la machine électrique (20) ;
calcul (120) d'une modification (E) du point de fonctionnement (M) d'une machine électrique (20) en raison d'une commande de la machine électrique (20) avec la première grandeur de réglage (R1) déterminée ;
calcul (130) d'une différence entre une valeur détectée du point de fonctionnement (M) et la modification (E) calculée du point de fonctionnement (M) en raison de la commande avec la première grandeur de réglage (R1) ;
détermination (140) d'une deuxième grandeur de réglage (R2) en vue de régler une première valeur de consigne (S1) prédéfinie dans la machine électrique (20) ; et
commande (150) de la machine électrique (20) en utilisant une combinaison de la première grandeur de réglage (R1) déterminée et de la deuxième grandeur de réglage (R2) déterminée.
